# EUROPÄISCHE PATENTANMELDUNG

(11) **EP 2 434 735 A1**
(43) Veröffentlichungstag der Anmeldung: **28.03.2012**
(21) Anmeldenummer: 11177466.7
(22) Anmeldetag: 12.08.2011
(51) Int. Cl.: H04M 1/673, H04M 1/725

(54) **Endbenutzer-Vorrichtung mit wenigstens zwei Betriebsmoden sowie Verfahren zum Betrieb hierfür**

(30) Priorität: 02.09.2010 DE 102010037280
(71) Anmelder: Heeg, Bernhard, 97816 Lohr am Main (DE)
(72) Erfinder:
(74) Vertreter: Götz, Georg Alois

(57) **Zusammenfassung**

Endbenutzer-Vorrichtung mit wenigstens zwei Betriebsmoden, wobei in einem ersten Sicherheitsmodus als privat gekennzeichnete Daten nicht dargestellt und/oder nicht bearbeitbar sind.

## Beschreibung

Es ist grundsätzlich bekannt, bei Endbenutzer-Vorrichtungen mehr als einen Betriebsmodus vorzusehen. Beispielsweise gibt es auf Recheneinrichtungen allgemein und dabei insbesondere auf Laptops einen Normalmodus zum Arbeiten und einen sogenannten Stromsparmodus, in dem der Energieverbrauch herabgesetzt ist. Die DE 100 59 014 A1 offenbart ein Verfahren zur Fernaktivierung eines Computers vom Stromsparmodus in den Normal- oder auch Arbeitsmodus.

Weiterhin ist bei Mobiltelefonen ein Modus mit Tastensperre bekannt. Dieser Modus soll Fehleingaben während des Transports des Mobiltelefons in einer Hosentasche vorbeugen. In diesem werden alle Tastendrücke bis auf ein Drücken der zum Entsperren definierten Taste ignoriert. Um ein ungewolltes Freischalten während des Transports zu verhindern ist vorgesehen, dass die zum Entsperren definierte Taste eine längere Zeit, etwa 3 Sekunden lang, zu drücken ist und das Entsperren dann noch mit dem Drücken einer weiteren Taste zu Bestätigen ist.

Zur Absicherung der Daten ist bei diesen Geräten ein Passwort bzw. bei Mobiltelefonen eine PIN zu vergeben. Um an die auf der jeweiligen Endbenutzer-Vorrichtung abgespeicherten Daten bzw. an die Daten des Benutzers zu gelangen ist dieses Passwort oder diese PIN im Rahmen ein Log-in-Vorgangs einzugeben.

Es ist daher Aufgabe der vorliegenden Anmeldung eine Endbenutzer-Vorrichtung mit wenigstens zwei Betriebsmoden anzugeben, bei dem die Benutzbarkeit ohne Sicherheitsverluste erhöht ist.

Zur Lösung der Aufgabe ist bei einer Endbenutzer-Vorrichtung der eingangs genannten Art vorgesehen, dass in einem ersten Sicherheitsmodus als privat gekennzeichnete Daten nicht dargestellt und/oder bearbeitbar sind.

Die Endbenutzer-Vorrichtung besitzt einen Normalmodus, in dem alle Daten bzw. alle Daten des Benutzers sichtbar sind. Hier ist zu unterscheiden, ob das Gerät die Benutzung durch mehrere Benutzer ermöglicht. Bei Mobiltelefonen sind nach Eingabe der PIN üblicherweise alle Daten sichtbar, da nur ein Benutzer vorgesehen ist. Bei Recheneinrichtungen werden dagegen grundsätzlich nur die Daten des Benutzers, der sich eingeloggt hat, angezeigt. Hat der Benutzer allerdings Administratorrechte kann er auch die Daten der anderen Benutzer einsehen.

Unter Daten sind dabei nutzerseitig erzeugte oder empfangene Daten zu verstehen. Dabei handelt es sich im Falle eines Mobiltelefons beispielsweise um die eingegebenen und abgespeicherten Telefonnummern, die abgespeicherten oder empfangenen SMS, MMS, Klingeltöne, Emails, etc. Bei Recheneinrichtungen reichen die Möglichkeiten von einzelnen Dokumenten, die mit den verschiedensten Programmen erzeugt wurden, bis hin zu kompletten Benutzerdaten.

Während der eine beispielsweise lediglich seine E-mails als schützenswert erachtet ist es insbesondere bei Unternehmensgeräten sinnvoll, alle Daten des Benutzers als sensibel einzustufen.

Es kann nun die Situation auftreten, dass die Endbenutzer-Vorrichtung ausgeliehen werden soll. Beispielsweise möchte ein Besucher die Recheneinrichtung des Gastgebers benutzen, um Informationen im Internet abzurufen. Oder ein Bekannter benötigt das Mobiltelefon, da er dringend jemanden anrufen muss.

Bei bekannten Geräten ergeben sich folgende Ergebnisse: bei Recheneinrichtungen bestünde zum Schutz der Daten die Möglichkeit, einen Account für den Besuch anzulegen. Diesem müssten evtl. nachträglich die Administratorrechte entzogen werden. In jedem Fall erfordert dies einen erheblichen Zeitaufwand und ist oft völlig unverhältnismäßig.

Im Fall des Mobiltelefons ist es gar nicht möglich einen zweiten Account anzulegen. Hier muss man dem Bekannten entweder vertrauen oder Ausreden erfinden, warum das eigene Mobiltelefon nicht benutzbar ist.

Dabei geht es nicht einmal darum, dass man befürchtet ausspioniert zu werden. Vielmehr kann auch der aufmerksamste Benutzer, insbesondere auf einem fremden Gerät, aus Versehen Daten löschen oder beschädigen. Beispielsweise weisen Mobiltelefone je nach Hersteller ganz unterschiedliche Bedienführungen auf. Dadurch ist es leicht möglich, einen Eintrag im Telefonbuch zu löschen statt den Betreffenden anzurufen.

Diese Probleme werden durch die erfindungsgemäße Endbenutzer-Vorrichtung vermieden. Denn durch die Benutzung des ersten Sicherheitsmodus können alle als privat gekennzeichnete Daten entweder vor dem Betrachten oder vor dem Bearbeiten oder vor beidem geschützt werden. So kann die Endbenutzer-Vorrichtung verliehen werden, ohne dass die abgespeicherten Daten beschädigt oder eingesehen werden.

Vorzugsweise kann der Benutzer auswählen, ob im ersten Sicherheitsmodus die Daten nicht angezeigt werden, nicht bearbeitbar sind oder beides der Fall ist. Grundsätzlich sind auch nicht angezeigte Daten bearbeitbar, sofern der Name der Daten und gegebenenfalls der Speicherort bekannt sind. Denn der Benutzer weiß selbst am besten, ob er seine Daten lediglich gegen Beschädigung oder auch gegen Spionage schützen muss.

Vorteilhafterweise ist die Kennzeichnung als privat automatisch in Abhängigkeit der Eigenschaften der Daten und/oder durch den Benutzer einstellbar. Bei Recheneinrichtungen sind auf jeden Fall in Programmen abgespeicherte Passwörter, E-mails und die Browserlesezeichen als sensibel und schützenswert einzustufen. Diese können daher aufgrund ihrer Eigenschaft als Passwort, E-mail bzw. Browserlesezeichen softwareseitig automatisch als privat gekennzeichnet werden. Daneben ist es selbstverständlich möglich, dass der Benutzer bestimmte Daten separat als privat kennzeichnet. Beispielsweise kann der Benutzer eines Mobiltelefons ganz gezielt einzelne Telefonnummern als privat kennzeichnen, da er allein durch das Vorhandensein der Nummer auf seinem Mobiltelefon mit Nachteilen rechnet. So ist es denkbar, dass es in einem Unternehmen Misstrauen erregt, wenn ein Angestellter die Telefonnummern eines Journalisten oder eines Psychologen abgespeichert hat. Erst recht kann das Vorhandensein der Telefonnummer eines Konkurrenzunternehmens zu Verdächtigungen führen. Werden diese problematischen Telefonnummern selektiv als privat gekennzeichnet so fällt es bei Verwendung des ersten Sicherheitsmodus nicht einmal auf, dass einzelne Nummern fehlen, da die restlichen Einträge im Telefonbuch noch vorhanden sind. In diesem Fall sind die von diesen Telefonnummern empfangenen Anrufe, SMS, MMS, etc. vorteilhafterweise automatisch auch als privat zu kennzeichnen. Ansonsten könnte der Fall eintreten, dass die Telefonnummer zwar nicht sichtbar ist, die erst recht vertrauliche SMS aber von jedermann gelesen werden kann. Bei dieser Mischform kennzeichnet der Benutzer also einzelne Daten wie Telefonnummern als privat, während davon abhängige Daten automatisch auch als privat gekennzeichnet werden.

Vorzugsweise sind in einem zweiten Sicherheitsmodus alle Daten nicht dargestellt und nicht bearbeitbar. Dieser weitere Sicherheitsmodus erlaubt die Benutzung der Endbenutzer-Vorrichtung in einem Zustand ähnlich wie beim Kauf. Ein Mobiltelefon kann zum Telefonieren und SMS oder MMS versenden genutzt werden, auf einer Recheneinrichtung können E-mails versandt und im Internet gesurft werden. Allerdings können die eingegebenen Daten nicht gespeichert werden, da dies eine Veränderung des Accounts des Benutzers zur Folge hätte. Der zweite Sicherheitsmodus erlaubt insbesondere das Verleihen des Geräts an an und für sich völlig Unbekannte, denen man seine Unterstützung aufgrund der äußeren Umstände nicht versagen möchte. So kann man die Endbenutzer-Vorrichtung an anscheinend in Not befindliche Personen verleihen ohne Angst davor haben zu müssen, dass diese irgendwelche Daten aus Versehen abändern. Ist im ersten Sicherheitsmodus lediglich das Verändern der als privat gekennzeichneten Daten verboten, die Daten als solche aber noch sichtbar, kann durch Umschalten in den zweiten Sicherheitsmodus die Sichtbarkeit aller Daten auf einmal vermieden werden.

Der erste und der zweite Sicherheitsmodus erlauben sowohl eine sehr fein justierbare wie auch eine globale Absicherung der Daten der Endbenutzer-Vorrichtung. Neben diesen Moden zusätzlich zum Normalmodus ist selbstverständlich das Vorsehen bereits bekannter Moden wie dem Stromsparmodus möglich.

Der Wechsel zwischen dem Normalmodus, dem ersten Sicherheitsmodus und dem zweiten Sicherheitsmodus ist dabei ein wichtiger Faktor, um die einfache Benutzbarkeit der Endbenutzer-Vorrichtung zu gewährleisten.

Vorteilhafterweise ist zum Wechseln von einem Sicherheitsmodus in den Normalmodus mit Darstellung der als privat gekennzeichneten Daten die Eingabe einer Authentifizierung erforderlich. Eine fehlende Authentifizierung ist nicht unbedingt ein Sicherheitsrisiko, wenn der fremde Benutzer aufgrund einer selektiven Kennzeichnung von Daten als geheim gar nicht bemerkt, dass sich die Endbenutzer-Vorrichtung im ersten Sicherheitsmodus befindet. In diesem Fall kann der Leiher aber ohne es zu wollen und zu bemerken den Modus wechseln und dann aus Versehen Daten beschädigen. Daher ist ein Authentifizierungszwang sinnvoll, um die gewollte Sicherheit nicht zu gefährden.

Mit besonderem Vorteil ist der Wechsel von einem Modus in einen anderen durch eine vorgebbare oder voreingestellte Tastatureingabe initiierbar.

Bei einigen Mobiltelefonen kann der Modus mit Tastatursperre durch mehrsekündiges Drücken der Rautetaste aktiviert werden. Analog dazu kann ein mehrsekündiges Drücken einer beliebigen bereits vorhandenen, aber vorgegebenen Taste in den ersten Sicherheitsmodus führen. Ein zweites mehrseküniges Drücken dieser Taste aktiviert dann den zweiten Sicherheitsmodus während das dritte Drücken über die Authentifizierung, sofern sie aktiviert ist, in den Normalmodus führt. In einer Alternative ist es denkbar, dass nach dem zweiten Drücken ein Abfrage erfolgt, ob in den Normalmodus oder den zweiten Sicherheitsmodus umgeschaltet werden soll. Der Übergang in den entsprechenden Modus, gegebenenfalls mit Authentifizierung bei Übergang in den Normalmodus, erfolgt nach Auswahl des entsprechenden Auswahlfeldes. Als Taste kommt beispielsweise die Taste mit der "1" in Betracht oder jede andere auf dem Mobiltelefon vorhandenen Taste.

Andererseits kann auch eine zusätzliche Taste, die Sicherheitsmodustaste, vorgesehen sein, die nur den Wechsel zwischen dem Normalmodus und dem ersten oder zweiten Sicherheitsmodus ermöglicht und ansonsten keine Funktionalität aufweist. Dann ist es möglich ausgehend vom Normalmodus oder vom zweiten Sicherheitsmodus durch einmaliges kurzes Drücken der Sicherheitsmodustaste in den ersten Sicherheitsmodus zu wechseln. Beim Übergang vom zweiten in den ersten Sicherheitsmodus kann dabei die Eingabe einer Authentifizierung notwendig sein. Durch zweimaliges kurzes Drücken der Sicherheitsmodustaste gelangt man in den zweiten Sicherheitsmodus. Da es sich dabei um den sichersten Modus handelt ist keine Authentifizierung notwendig. "Kurz" bedeutet hier einen Zeitraum von weniger als einer Sekunde.

Durch längeres Drücken der Sicherheitstaste, insbesondere länger als zwei Sekunden, wird ausgehend vom ersten oder zweiten Sicherheitsmodus der Übergang in den Normalmodus initiiert. Nach Eingabe der Authentifizierung befindet sich die Endbenutzer-Vorrichtung wieder im Normalmodus.

Statt einer einzelnen Taste kann auch eine Tastaturkombination verwendet werden. Neben einer Standardvorgabe durch den Hersteller ist auch eine nutzerseitige Vorgabe der Tastaturkombination möglich. Dadurch kann alleine der Benutzer der Endbenutzer-Vorrichtung den Übergang in einen unsichereren Modus initiieren. Derartige Tastaturkombinationen sind insbesondere auf Recheneinrichtungen weit verbreitet. Ein Beispiel ist die Kombination Strg-S, die die Kombination der Steuerungstaste "Strg" mit der Taste "S" benennt und mit der in vielen Programmen eine Speicherung der aktuell bearbeiteten Datei durchgeführt wird.

Alternativ kann der Wechsel zwischen den Moden auch durch Stimmbefehle durchgeführt werden. Dann muss der Benutzer nur Befehle wie "Normalmodus", "Sicherheitsmodus eins" oder "Sicherheitsmodus zwei" in ein an der Endbenutzer-Vorrichtung vorhandenes Mikrofon sagen, um einen Wechsel der Moden zu bewirken. Selbstverständlich wird auch hierbei beim Wechsel von einem sichereren in einen unsichereren Modus eine Authentifizierung verlangt.

Eine weitere Alternative besteht darin, den gewünschten Modus über ein Menu an der Endbenutzer-Vorrichtung einzustellen. Dabei kann dieser Wechsel über das Startmenu, das alle gängigen Betriebssysteme auf Recheneinrichtungen in unterschiedlichen Formen vorsehen, oder einen Menu-Eintrag eines Programms oder einen Eintrag in den Einstellungen bzw. der Systemsteuerung eingestellt werden.

Vorzugsweise kann der Wechsel von einem Sicherheitsmodus in den Normalmodus mit einem biometrischen Merkmal authentifizierbar sein. Dabei kann als biometrisches Merkmal ein Stimmsignal oder ein Fingerabdruck verwendet werden. Mit biometrischen Merkmalen wird normalerweise eine höhere Sicherheit bei der Authentifizierung erreicht, da derartige Merkmale schwerer zu ermitteln sind als Passwörter. Passwörter können durch Brute-Force-Angriffe auch ohne Verschulden des Benutzers erraten werden. Auch ist eine nicht unübliche Gefahrenquelle, Passwörter aufzuschreiben und an der entsprechenden Recheneinrichtung zu hinterlegen. Wird das Passwort entdeckt ist die Schutzfunktion nicht mehr gewährleistet. Derartige Angriffe sind bei biometrischen Merkmalen nicht gleichermaßen durchführbar und daher sicherer.

Stimmsignale sind besonders effektiv einsetzbar wenn der Wechsel zwischen den Moden mit einem Sprachsignal initiiert wird. Dann reicht die Angabe des gewünschten Modus um einerseits den Wechsel anzuzeigen und auch gleich die Authentifizierung durchzuführen.

Mit besonderem Vorteil ist die Endbenutzer-Vorrichtung eine Recheneinrichtung, ein Musikabspielgerät, ein Tablet-Computer, ein Smartphone oder ein Mobiltelefon. Unter Recheneinrichtung werden Personal Computer, Power PCs, Netbooks, Notebooks und Laptops, also Geräte mit einem vollständigen Betriebssystem und einem wenigstens mehrere Zoll großen Bildschirm verstanden. Musikabspielgeräte sind beispielsweise sogenannte MP3-Spieler. Diese spielen eine Vielzahl an Formaten ab, nicht nur das MP3-Format, auch wenn sie diese Bezeichnung tragen. Tablet-Computer sind Recheneinrichtungen, die überwiegend mittels eines Touchscreen gesteuert werden und nur wenige Tasten zur Bedienung aufweisen. Sie sind kleinformatig, in der Regel unter 10 Zoll, und vor allem zum Abspielen von Musikdateien, Videos und Ebooks gedacht. Smartphones weisen im Unterschied zu Mobiltelefonen einen Touchscreen auf und erlauben auch das Schreiben und Empfangen von E-mails. Diese Aufzählung von Endbenutzer-Vorrichtungen ist nicht abschließend, aufgrund von ständigen Neuentwicklungen stehen vielmehr immer wieder neue Endbenutzer-Vorrichtungen zur Verfügung.

Daneben betrifft die Erfindung auch ein Verfahren zum Betrieb einer Endbenutzer-Vorrichtung mit wenigstens zwei Betriebsmoden. Dieses zeichnet sich dadurch aus, dass in einem ersten Sicherheitsmodus als privat gekennzeichnete Daten nicht dargestellt werden und/oder nicht bearbeitet werden können. Weitere Ausgestaltungen des Verfahrens ergeben sich aus den Unteransprüchen sowie aus der Beschreibung der Endbenutzer-Vorrichtung.

Weitere Vorteile, Merkmale und Einzelheiten der Erfindung ergeben sich anhand der folgenden Ausführungsbeispiele sowie aus den Zeichnungen. Dabei zeigen:
- Figur 1: ein Mobiltelefon,
- Figur 2: einen Tablet-Computer,
- Figur 3: eine Recheneinrichtung in einer ersten Ausführungsform,
- Figur 4: eine Recheneinrichtung in einer zweiten Ausführungsform,
- Figur 5: ein Musikabspielgerät,
- Figur 6: ein Smartphone, und
- Figur 7: ein Diagramm der Modusänderungen.

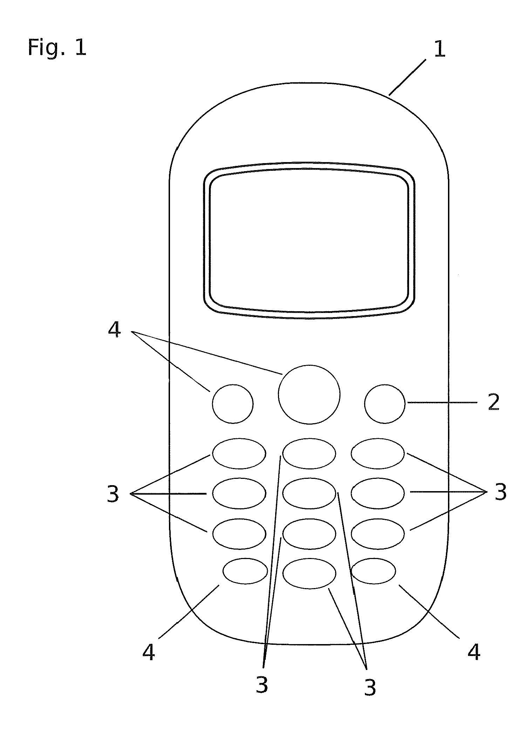

Figur 1 zeigt ein Mobiltelefon 1 mit einer Sicherheitsmodustaste 2. Daneben weist das Mobiltelefon 1 Zifferntasten 3 und Steuerungstasten 4 auf. Nach dem Startvorgang muss der Benutzer seine sogenannte PIN eingeben. Danach befindet sich das Mobiltelefon 1 im Normalmodus 5. In diesem können beliebige Daten als privat gekennzeichnet und als privat gekennzeichnete Daten wieder als öffentlich gekennzeichnet werden. Bei diesen Daten handelt es sich um vom Benutzer eingegebene oder empfangene Daten oder vorgenommene Einstellungen wie Telefonnummern, SMS, MMS oder Browserlesezeichen. Durch kurzes, insbesondere etwa halbsekündiges, Drücken der Sicherheitsmodustaste 2 werden alle als privat gekennzeichnete Daten nicht bearbeitbar und damit nicht veränderbar. Das Mobiltelefon befindet sich im ersten Sicherheitsmodus 6. Die Daten sind aber weiterhin sichtbar. So können der Benutzer und andere Verwender das Mobiltelefon 1 gebrauchen ohne die als privat gekennzeichneten Daten verändern, insbesondere löschen, zu können.

Durch zweimaliges kurzes Drücken der Sicherheitsmodustaste 2 gelangt der Benutzer in den zweiten Sicherheitsmodus 7. In diesem ist nur noch das Telefonieren, Neuerstellen und abschicken von SMS und MMS möglich. Welche Aktionen genau möglich sind ist im einem Menu der am Mobiltelefon 1 vornehmbaren Einstellungen konfigurierbar. Der Benutzer kann selbst festlegen, ob im zweiten Sicherheitsmodus eine oder mehrere der Aktionen Telefonieren, SMS schreiben und senden, MMS schreiben und senden oder auch im Internet surfen erlaubt sind.

Ein längeres, insbesondere etwa zweisekündiges, Drücken der Sicherheitsmodustaste 2 führt in einen Authentifizierungsdialog, in dem die auf der SIM-Karte des Mobiltelefons 1 abgespeicherte PIN abgefragt wird. Durch die Eingabe der richtigen PIN befindet sich das Mobiltelefon dann im Normalmodus 5. Auch ein Wechsel vom zweiten Sicherheitsmodus 7 in den ersten Sicherheitsmodus 6 verlangt eine Authentifizierung. Ein Wechsel vom Normalmodus 5 in einen der Sicherheitsmoden 6 oder 7 oder vom ersten Sicherheitsmodus 6 in den zweiten Sicherheitsmodus 7 verlangt dagegen keine Authentifizierung, da ein solcher Wechsel unkritisch ist.

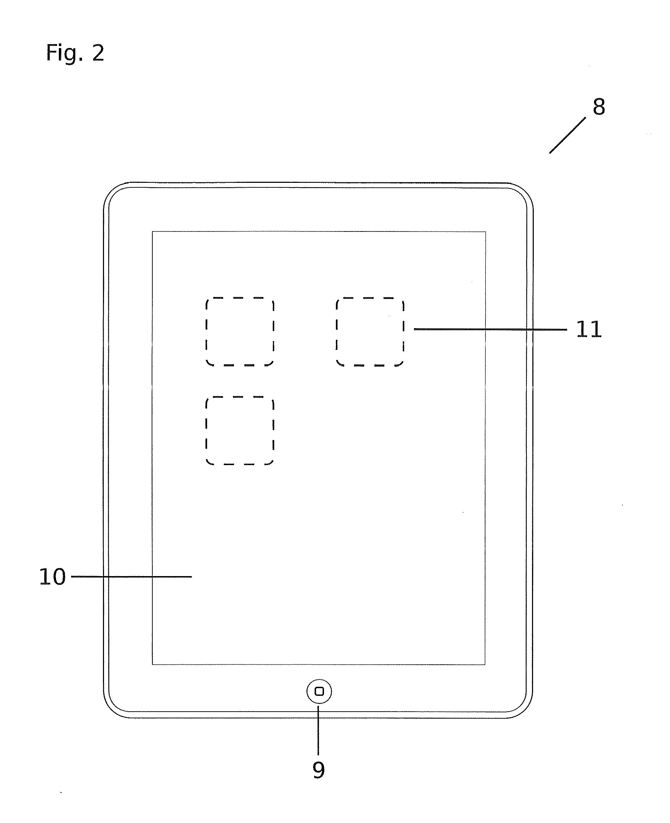

Figur 2 zeigt einen Tablet-Computer 8. Dieser weist neben einer Aktivierungstaste 9 einen Touchscreen 10 auf. Über den Touchscreen 10 kann die Minianwendung Tastatur 11 gestartet werden. Mit der Tastaturkombination Strg-Alt-1 wechselt der Benutzer in den ersten Sicherheitsmodus 6. In diesem Modus sind alle als privat gekennzeichneten Daten nicht sichtbar und nicht bearbeitbar. Die Kennzeichnung erfolgt automatisch anhand der Eigenschaften der Daten. Alle E-mails des Benutzers, Browsercookies, Browserlesezeichen, Einträge im Adressbuch und Einträge im Terminkalender sind automatisch als privat gekennzeichnet. Mit den auf dem Tablet-Computer 8 vorhandenen Programmen können aber neue Daten bzw. Dateien erstellt und auch auf dem Tablet-Computer gespeichert werden. Zum Arbeiten stehen alle Daten bzw. Dateien zur Verfügung, die nicht automatisch als privat gekennzeichnet wurden.

Die Tastaturkombination Strg-Alt-2 bewirkt einen Wechsel in den zweiten Sicherheitsmodus 7. In diesem sind alle Daten nicht sichtbar und nicht bearbeitbar. Nur die Programme stehen zum Arbeiten zur Verfügung. Daten können nur außerhalb des Tablet-Computers 8, beispielsweise auf einem USB-Stick oder einem sogenannten Internet-Laufwerk gespeichert werden. Selbstverständlich können sowohl im ersten Sicherheitsmodus 6 wie auch im zweiten Sicherheitsmodus 7 die Programme, die zum Arbeiten verwendbar sind, vom Benutzer vorgegeben werden.

Aus den Sicherheitsmoden gelangt man mit der Tastaturkombination Strg-Alt-N in den Normalmodus 5. Eine Authentifizierung erfolgt jeweils beim Wechsel in einen unsichereren Modus.

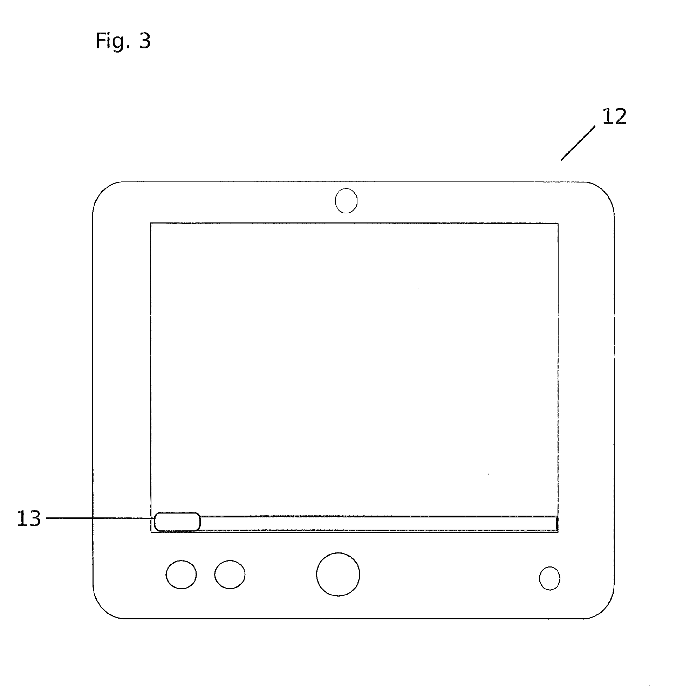

Figur 3 zeigt eine Recheneinrichtung 12 in Form eines Personal Computers. Zur Vereinfachung ist lediglich der Monitor dargestellt. Bei dieser Recheneinrichtung 12 wird die Auswahl zwischen dem Normalmodus 5, dem ersten Sicherheitsmodus 6 und dem zweiten Sicherheitsmodus 7 über das Startmenu 13 vorgenommen. Dieses enthält neben den bereits bekannten Optionen "Dokumente", "Programme" oder "Systemsteuerung" auch die Option "Sicherheitsmodus". Zur Auswahl stehen die Menüpunkte "Normal" für den Normalmodus 5, "einfache Sicherheit" für den ersten Sicherheitsmodus 6 und "erhöhte Sicherheit" für den zweiten Sicherheitsmodus 7. Selbstverständlich kann zusätzlich auch eine Tastaturkombination zum Wechsel in die einzelnen Moden wie bereits beschrieben vergeben werden. Im ersten Sicherheitsmodus 6 sind die als privat gekennzeichneten Daten nicht sichtbar, aber, sofern sie bekannt sind, editierbar. Im zweiten Sicherheitsmodus 7 sind alle Daten, insbesondere Dateien und Ordner, nicht sichtbar und nicht editierbar. Auch an der Recheneinrichtung kann für jeden Sicherheitsmodus vorgegeben werden, welche Programme benutzbar sind und welche nicht.

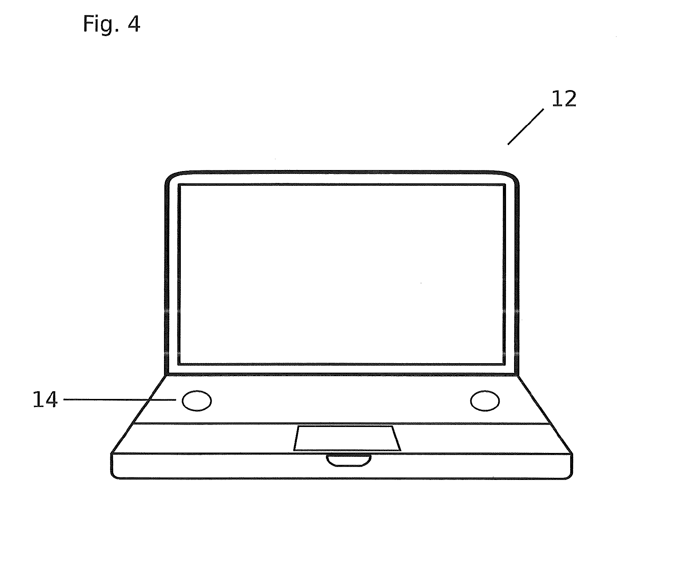

Eine alternative Ausgestaltung einer Recheneinrichtung 12 in Form eines Laptops zeigt Figur 4. Die Recheneinrichtung besitzt ein Mikrofon 14 zur Aufnahme von Stimmbefehlen. Der in das Mikrofon gesprochene Befehl "Normalmodus" führt in den Normalmodus 5, "Sicherheitsmodus eins" in den ersten Sicherheitsmodus 6 und "Sicherheitsmodus zwei" in den zweiten Sicherheitsmodus 7. Praktischerweise erfolgt die Authentifizierung automatisch mittels Stimmerkennung. Das dafür benötigte Programm befindet sich selbstverständlich auf der Recheneinrichtung 12. Da der Benutzer zur Authentifizierung nicht interagieren muss erfolgt die Benutzererkennung bei allen einen Moduswechsel verfolgenden Befehlen. Diese Ausgestaltung ist natürlich bei allen Arten von Endbenutzer-Vorrichtung möglich, die ein Mikrofon aufweisen.

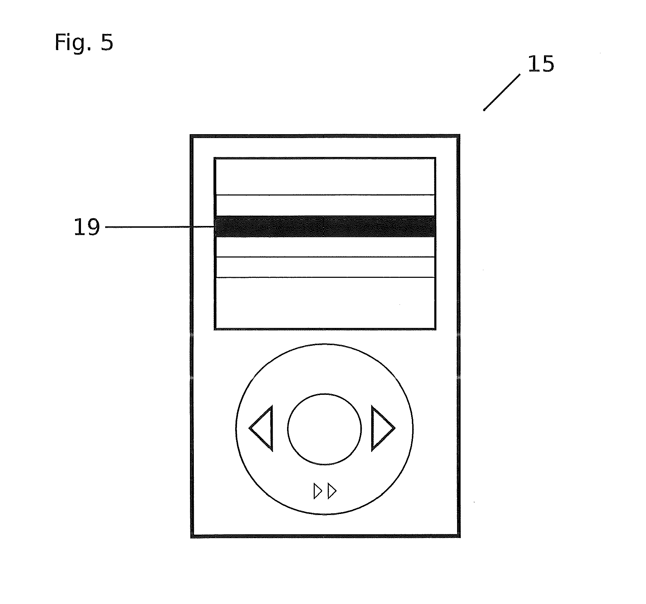

Aus Figur 5 geht ein Musikabspielgerät 15 hervor. Dieses hat einen Menupunkt 19 "Sicherheit" mit den Auswahlfeldern "Normal" und "Sicher" für den Normalmodus 5 bzw. den ersten Sicherheitsmodus 6. Im ersten Sicherheitsmodus 6 sind alle Musiktiteleinstellungen und Wiedergabelisten gegen Veränderung, also Bearbeiten und Löschen, gesichert. Veränderbar ist beispielsweise der zu empfangende Radiosender, nicht aber die Radio-Favoritenliste. Ein Wechsel vom ersten Sicherheitsmodus 6 in den Normalmodus 5 erfordert eine Authentifizierung durch Auswahl eines vorgegebenen Musiktitels oder Radiosenders, da weder ein Mikrofon 14 noch eine Tastatur 11 zur Verfügung stehen. In dieser Ausgestaltung dient der erste Sicherheitsmodus 6 also lediglich dazu, ein unbeabsichtigtes Bearbeiten von Daten zu verhindern.

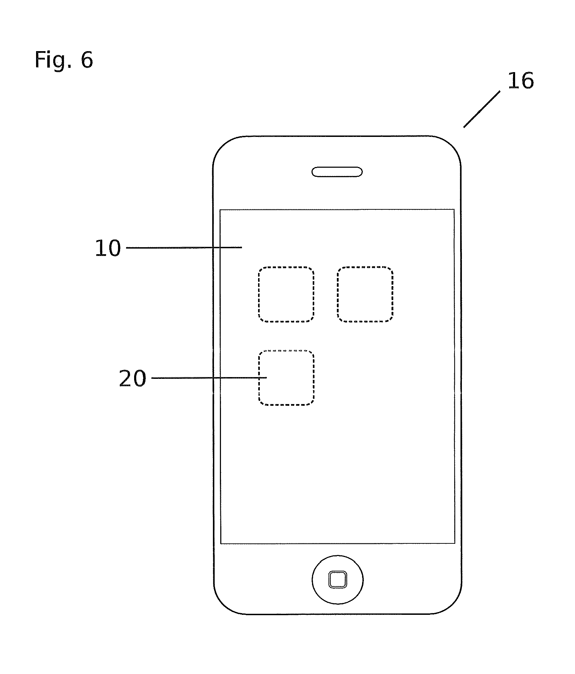

Figur 6 zeigt ein Smartphone 16. Dieses hat zur Steuerung im Wesentlichen einen Touchscreen 10. Zum Moduswechsel ruft der Benutzer die Minianwendung "Sicherheit" 20 auf und wählt zwischen den Menüpunkten "Normal" für den Normalmodus 5, "einfache Sicherheit" für den ersten Sicherheitsmodus 6 und "erhöhte Sicherheit" für den zweiten Sicherheitsmodus 7. Beim Wechsel in den Normalmodus 5 oder vom zweiten Sicherheitsmodus 7 in den ersten Sicherheitsmodus 6 erscheint automatisch eine Tastatur 11 zur Authentifizierung. Im Normalmodus können beliebige Daten wie Telefonnummern oder E-mails als privat gekennzeichnet werden. Der Benutzer kann aber auch Regeln vergeben, dass alle E-mails oder alle Telefonnummern oder alle empfangenen SMS automatisch als privat gekennzeichnet werden. Alle davon abhängigen Daten wie zu bestimmten als privat gekennzeichneten Telefonnummern empfangene SMS werden dann automatisch auch als privat gekennzeichnet. Die als privat gekennzeichneten Daten sind im ersten Sicherheitsmodus 6 weder sichtbar noch bearbeitbar.

Es ergeben sich in Abhängigkeit von der jeweiligen Endbenutzer-Vorrichtung zwar in Einzelfällen gerätebedingte Einschränkungen wie beispielsweise beim Musikabspielgerät 16, jedoch ist die grundsätzliche Funktionalität der Betriebsmoden gleich. In den Ausführungsbeispielen gezeigte Unterschiede zwischen der Bearbeitbarkeit oder Sichtbarkeit der als privat gekennzeichneten Daten im ersten Sicherheitsmodus 6 gehen dementsprechend auf Benutzereinstellungen zurück und sind nicht geräteabhängig zu verstehen. Ebenso ist die Art der Authentifizierung nicht auf die jeweils beschriebene Endbenutzer-Vorrichtung beschränkt sondern grundsätzlich auf alle Arten von Endbenutzer-Vorrichtungen übertragbar.

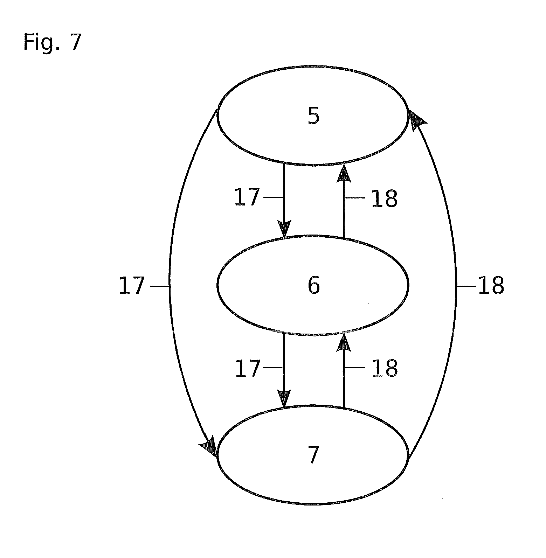

Figur 7 zeigt ein Übersichtsdiagramm über die Wechsel zwischen dem Normalmodus 5, dem ersten Sicherheitsmodus 6 und dem zweiten Sicherheitsmodus 7 und den dabei notwendigen Authentifizierungen. Die Initiierung des Wechsels erfolgt mit den beschriebenen Mitteln wie Tastaturkombination, Sicherheitsmodustaste 2, Stimmbefehl oder auch Menueingabe im Startmenu oder in einer Minianwendung. Zur Authentifizierung selbst sind alle beschriebenen Wege möglich, insbesondere ein Stimmsignal, ein Fingerabdruck, ein Passwort oder auch ein PIN. Die Pfeile 17 stehen für einen Wechsel ohne Authentifizierung, bei den durch die Pfeile 18 angezeigten Wechseln ist dagegen eine Authentifizierung erforderlich.

### Bezugszeichenliste

- 1: Mobiltelefon
- 2: Sicherheitsmodustaste
- 3: Zifferntaste
- 4: Steuerungstaste
- 5: Normalmodus
- 6: Erster Sicherheitsmodus
- 7: Zweiter Sicherheitsmodus
- 8: Tablet-Computer
- 9: Aktivierungstaste
- 10: Touchscreen
- 11: Tastatur
- 12: Recheneinrichtung
- 13: Startmenu
- 14: Mikrofon
- 15: Musikabspielgerät
- 16: Smartphone
- 17: Pfeil
- 18: Pfeil
- 19: Menupunkt
- 20: Minianwendung

## Patentansprüche

1. Endbenutzer-Vorrichtung mit wenigstens zwei Betriebsmoden, **dadurch gekennzeichnet, dass** in einem ersten Sicherheitsmodus (6) als privat gekennzeichnete Daten nicht dargestellt und/oder bearbeitbar sind.

2. Endbenutzer-Vorrichtung nach Anspruch 1, **dadurch gekennzeichnet, dass** die Kennzeichnung als privat automatisch in Abhängigkeit der Eigenschaften der Daten und/oder durch den Benutzer einstellbar ist.

3. Endbenutzer-Vorrichtung nach Anspruch 1 oder 2, **dadurch gekennzeichnet, dass** in einem zweiten Sicherheitsmodus (7) alle Daten nicht dargestellt und nicht bearbeitbar sind.

4. Endbenutzer-Vorrichtung nach einem der Ansprüche 1 bis 3, **dadurch gekennzeichnet, dass** zum Wechseln von einem Sicherheitsmodus (6, 7) in einen Normalmodus (5) mit Darstellung der als privat gekennzeichneten Daten die Eingabe einer Authentifizierung erforderlich ist.

5. Endbenutzer-Vorrichtung nach einem der vorangehenden Ansprüche, **dadurch gekennzeichnet, dass** der Wechsel von einem Modus (5, 6, 7) in einen anderen durch eine vorgebbare oder voreingestellte Tastatureingabe und/oder eine Menuauswahl und/oder einen Sprachbefehl initiierbar ist.

6. Endbenutzer-Vorrichtung nach einem der vorangehenden Ansprüche, **dadurch gekennzeichnet, dass** der Wechsel in den Normalmodus (5) mit einem biometrischen Merkmal authentifizierbar ist.

7. Endbenutzer-Vorrichtung nach Anspruch 6, **dadurch gekennzeichnet, dass** als biometrisches Merkmal ein Stimmsignal oder ein Fingerabdruck verwendbar ist.

8. Endbenutzer-Vorrichtung nach einem der vorangehenden Ansprüche, **dadurch gekennzeichnet, dass** es eine Recheneinrichtung (12), ein Musikabspielgerät (15), ein Tablet-Computer (8), ein Smartphone (16) oder ein Mobiltelefon (1) ist.

9. Verfahren zum Betrieb einer Endbenutzer-Vorrichtung mit wenigstens zwei Betriebsmoden, **dadurch gekennzeichnet, dass** in einem ersten Sicherheitsmodus (6) als privat gekennzeichnete Daten nicht dargestellt werden.

10. Verfahren nach Anspruch 9, **dadurch gekennzeichnet, dass** die Daten automatisch in Abhängigkeit ihrer Eigenschaften und/oder durch den Benutzer als privat gekennzeichnet werden.

11. Verfahren nach Anspruch 9 oder 10, **dadurch gekennzeichnet, dass** in einem zweiten Sicherheitsmodus (7) alle Daten nicht dargestellt werden und nicht bearbeitet werden können.

12. Verfahren nach einem der Ansprüche 9 bis 11, **dadurch gekennzeichnet, dass** zum Wechseln von einem Sicherheitsmodus (6, 7) in einen Normalmodus (5) mit Darstellung der als privat gekennzeichneten Daten eine Authentifizierung eingegeben wird.

13. Verfahren nach Anspruch 12, **dadurch gekennzeichnet, dass** der Wechsel von einem Modus (5, 6, 7) in einen anderen durch eine vorgebbare oder voreingestellte Tastatureingabe und/oder eine Menuauswahl und/oder einen Sprachbefehl initiierbar wird.

14. Verfahren nach einem der Ansprüche 9 bis 13, **dadurch gekennzeichnet, dass** der Wechsel von einem Modus (5, 6, 7) in einen anderen mit einem biometrischen Merkmal authentifiziert wird.

15. Verfahren nach Anspruch 14, **dadurch gekennzeichnet, dass** als biometrisches Merkmal ein Stimmsignal oder ein Fingerabdruck verwendet wird.
